Europäisches Patentamt

European Patent Office

Office européen des brevets

(19)

(11) Veröffentlichungsnummer : **0 464 056 B1**

## (12) EUROPÄISCHE PATENTSCHRIFT

(45) Veröffentlichungstag der Patentschrift :
**03.02.93 Patentblatt 93/05**

(51) Int. Cl.$^5$ : **H05B 3/74**

(21) Anmeldenummer : **90904613.8**

(22) Anmeldetag : **15.03.90**

(86) Internationale Anmeldenummer :
**PCT/EP90/00428**

(87) Internationale Veröffentlichungsnummer :
**WO 90/11671 04.10.90 Gazette 90/23**

(54) HEIZVORRICHTUNG FÜR DAS GAREN VON SPEISEN, INSBESONDERE KOCHPLATTE.

(30) Priorität : **21.03.89 DE 3909246**

(43) Veröffentlichungstag der Anmeldung :
**08.01.92 Patentblatt 92/02**

(45) Bekanntmachung des Hinweises auf die
Patenterteilung :
**03.02.93 Patentblatt 93/05**

(84) Benannte Vertragsstaaten :
**AT BE CH DE DK ES FR GB IT LI LU NL SE**

(56) Entgegenhaltungen :
**EP-A- 317 022**
**EP-A- 339 739**
**FR-A- 2 138 464**

(56) Entgegenhaltungen :
**FR-A- 2 331 231**
**GB-A- 1 273 023**
**GB-A- 2 137 060**
**GB-A- 2 154 110**
**US-A- 3 331 941**

(73) Patentinhaber : **LEYBOLD**
**AKTIENGESELLSCHAFT**
**Wilhelm-Rohn-Strasse 25, Postfach 1555**
**W-6450 Hanau am Main 1 (DE)**

(72) Erfinder : **LOTZ, Hans-Georg**
**Hühnerberg 9a**
**W-6466 Gründau 2 (DE)**

(74) Vertreter : **Zapfe, Hans, Dipl.-Ing.**
**Am Eichwald 7, Postfach 20 01 51**
**W-6056 Heusenstamm 2 (Rembrücken) (DE)**

EP 0 464 056 B1

EP 0 464 056 B1

## Beschreibung

Die Erfindung betrifft eine Heizvorrichtung für das Garen von Speisen mittels mindestens einer auf einen Garungsort für die Unterbringung von Gargut oder eines Gargutbehälters ausgerichteten Strahlungsquelle, die optische Strahlung mit einem sichtbaren Anteil und einem Infrarotanteil aussendet, wobei zwischen der Strahlungsquelle und dem Garungsort ein Filter mit einem Trägerkörper aus einem für die Gesamtstrahlung im wesentlichen durchlässigen Werkstoff angeordnet ist, der mit einem Interferenz-Schichtsystem versehen ist, welches den sichtbaren Anteil der Strahlung zumindest überwiegend zur Strahlungsquelle reflektiert und den Infrarotanteil der Strahlung zumindest überwiegend zum Garungsort durchläßt.

Eine derartige Heizvorrichtung, die als Kochplatte ausgebildet ist, ist durch die GB-A- 2137060 Stand der Technik. Es geht dabei darum, einen auf die Kochplatte gestellten Gargutbehälter (Kochtopf) durch den Infrarotanteil der optischen Strahlung zu beheizen, ohne daß der äußerst intensive sichtbare Anteil der optischen Strahlung in den Küchenraum eindringt. Die hier interessierende Grenze zwischen dem sichtbaren und dem infraroten Anteil der optischen Strahlung liegt bei etwa 750 nm. Trägerkörper und Interferenz-Schichtsystem bilden ein Filter mit einem Kantenverlauf, dessen Mitte bei den genannten 750 nm liegt.

Interferenz-Schichtsysteme sind gekennzeichnet durch alternierende Reihenfolgen von abwechselnd hoch- und niedrigbrechenden Schichten. Bei der zum Stande der Technik gehörenden Lösung werden als Schichtwerkstoffe Titandioxid mit einem Brechungsindex von etwa 2,25 und Siliziumdioxid-Schichten mit einem Brechungsindex von etwa 1,45 verwendet. Um hierbei ein ausreichendes Trennverhalten des Filters bzw. einen entsprechenden Verlauf der Filterkante zu erhalten, ist es erforderlich, insgesamt 43 alternierende Schichten aus den genannten Werkstoffen aufzubringen. Dies ist ein verhältnismäßig sehr aufwendiger Prozeß, der im Vakuum durchgeführt werden muß, und zwar vorzugsweise durch Aufdampfen der genannten Schichtwerkstoffe durch Elektronenstrahlverdampfung. Die Herstellung ist also entsprechend teuer.

Je kleiner die Anzahl der Schichten ist, um so besser ist ihr spannungsfreier Aufbau und die haftfeste Verbindung dieser Schichten mit dem Trägerkörper, dem sogenannten Substrat, sowie auch untereinander.

Der Erfindung liegt daher die Aufgabe zugrunde, eine Heizvorrichtung der eingangs beschriebenen Gattung anzugeben, deren Filter einen wesentlich einfacheren Schichtaufbau besitzt und mit einer sehr viel geringeren Anzahl von Einzelschichten auskommt, wobei das Schichtsystem gleichzeitig sehr weitgehend frei von inneren Spannungen ist und eine gute Haftfestigkeit der Schichten untereinander sowie gegenüber dem Substrat (Trägerkörper) aufweist.

Die Lösung der gestellten Aufgabe erfolgt bei der eingangs beschriebenen Heizvorrichtung erfindungsgemäß dadurch. daß das Interferenz-Schichtsystem aus einer alternierenden Reihenfolge von Schichten aus Silizium und Siliziumdioxid besteht, deren physikalische Schichtdicken für das Silizium zumindest beim überwiegenden Teil der Si-Schichten zwischen 20 und 50 nm und für das $SiO_2$ zumindest beim überwiegenden Teil der $SiO_2$-Schichten zwischen 80 und 110 nm liegen.

Aufgrund der Auswahl der Schichtwerkstoffe und der Dimensionierung der Einzelschichten ist es möglich, mit einer sehr viel geringeren Anzahl von Schichtpaaren auszukommen. Bereits mit 5 Schichtpaaren, d.h. insgesamt 10 Einzelschichten, wird eine ganz hervorragende Filtercharakteristik erzeugt, wie dies anhand einer Transmissionskurve in der Detailbeschreibung noch näher erläutert wird. Das erfindungsgemäße Schichtsystem ist auch sehr weitgehend frei von inneren Spannungen.

Der Brechungsindex für Silizium liegt im infraroten Bereich bei etwa n = 3,5, der Brechungsindex für $SiO_2$ bei n = 1,45. Auf diesen, sehr großen, Abstand der Brechungsindizes ist u.a. die geringe Anzahl der Einzelschichten zurückzuführen. Hinzu kommt jedoch außerdem das relativ sehr starke Absorptionsvermögen von Silizium für optische Strahlung im sichtbaren Bereich Ein hoher Brechungsindex einerseits und ein relativ starkes Absorptionsverhalten des Siliziums andererseits ergänzen sich in vorteilhafter Weise.

Versuche haben überdies gezeigt, daß das erfindungsgemäße Schichtsystem hinsichtlich Standzeit, Hitzebeständigkeit und optischer Qualität allen bisher untersuchten Filtern überlegen ist.

Es ist dabei mit besonderem Vorteil möglich, den Trägerkörper aus einem infrarotdurchlässigen glaskeramischen Werkstoff auszubilden, eine Maßnahme, die zum Stande der Technik gehört, und diesen Trägerkörper, das sogenannte Substrat, mit dem erfindungsgemäßen Interferenz-Schichtsystem auszustatten und als Kochplatte zu verwenden. Es ist dabei wiederum besonders vorteilhaft, wenn das Interferenz-Schichtsystem auf der Unterseite der Kochplatte angeordnet ist.

Das erfindungsgemäße Filter ist jedoch nicht auf die Verwendung als Kochplatte, d.h. zum direkten Aufsetzen eines Kochtopfs, beschränkt. Vielmehr ist es auch möglich, das erfindungsgemäße Filter als Begrenzungswand eines Back- und Grillraumes zu verwenden und den verblieben-en infraroten Anteil der optischen Strahlung unmittelbar auf das Back- oder Grillgut zu richten.

Beim Einsatz der Interferenzschicht auf der unteren Oberfläche einer Kochplatte wird diese außerdem einer sehr viel geringeren thermischen Belastung ausgesetzt, als wenn sie beispielsweise auf der Außenseite

2

einer Quarzlampe oder auf der Oberfläche eines die Quarzlampe umgebenden rohrförmigen Trägerkörpers aufgebracht wäre .

Als Material für den Trägerkörper einer Kochplatte können in besonders vorteilhafter Weise die Werkstoffe "Neoceram-black" der Firma Nippon Electric Glass Company,"Corning-Material 9632" der Firma Corning-Glass oder die glaskeramischen Werkstoffe "Robax" bzw. "Ceran" der Firma Schott in Mainz verwendet werden. Zwar handelt es sich bei diesen Bezeichnungen um eingetragene Warenzeichen der betreffenden Firmen, jedoch werden die Handelsgeschäfte unter diesen Bezeichnungen abgewickelt. Die betreffenden Werkstoffe haben im Infrarotbereich den erforderlichen hohen Transmissionsgrad und gleichzeitig die erforderliche mechanische Festigkeit und chemische Beständigkeit.

Es ist dabei weiterhin von Vorteil, wenn die Kochplatte mehrere Abstellflächen für Gargutbehälter aufweist und mit einem zumindest weitgehend gegenüber optischer Strahlung undurchlässigen Maskierungselement versehen ist, durch das innerhalb der Kochplatte mehrere, die Abstellflächen definierende infrarotdurchlässige Flächenbereiche von strahlungsundurchlässigen Flächenbereichen abgegrenzt sind.

Die infrarotdurchlässigen Bereiche werden dabei besonders zweckmäßig als Kreisflächen innerhalb des Maskierungselements angeordnet, wobei sie zweckmäßig eine Größe aufweisen und hinsichtlich der Durchmesser in ähnlicher Weise abgestuft sind, wie dies von den herkömmlichen Masse-Kochplatten her bekannt ist.

Als Maskierungselement kann dabei eine für den Gesamtbereich der optischen Strahlung undurchlässige Oberflächenbeschichtung des Trägerkörpers verwendet werden; es ist aber auch möglich, unterhalb der Kochplatte eine mit entsprechend angeordneten Durchbrechungen versehene Metallplatte anzubringen, deren Öffnungen gewissermaßen als Blenden für die Strahlung dienen.

Es ist dabei weiterhin von Vorteil, wenn das Interferenz-Schichtsystem  hinsichtlich seiner spektralen Eigenschaften einen solchen Kantenverlauf hat, daß es für einen Strahlungsanteil im sichtbaren Rotbereich durchlässig ist.

In einem solchen Fall hat die Kochplatte im Bereich der Abstellflächen für die Gargutbehälter, d.h. in dem entsprechenden Durchlässigkeitsbereich bei eingeschalteter Strahlungsquelle eine gewisse Warnfunktion, d.h. die nicht mit einem Gargutbehälter besetzte Abstellfläche leuchtet dabei ähnlich wie eine glühende Masse-Kochplatte. Diese Warnfunktion schützt die Bedienungsperson davor, beispielsweise ihre Handfläche auf die Kochplatte zu legen, die im übrigen kalt erscheint, von der aber dennoch durch die Strahlung eine Verbrennungsgefahr ausgeht.

Eine erfindungsgemäß ausgebildete Kochplatte hat die Regeleigenschaften eines Gasherdes: Wenn die Bedienungsperson sich entschließt, die Heizleistung zu vergrößern oder zu verkleinern, dann geschieht dies durch den Einsatz bekannter, auf die Quarzlampe einwirkender Stellglieder absolut spontan. Inbesondere das lästige "Nachkochen", das von den Masse-Kochplatten her bekannt ist, wird vollständig vermieden. Allenfalls wird noch diejenige Energiemenge in Verdampfungswärme umgesetzt, die im Boden des Gargutbehälters gespeichert ist.

Weitere vorteilhafte Ausgestaltungen des Erfindungsgegenstandes ergeben sich aus den übrigen Unteransprüchen.

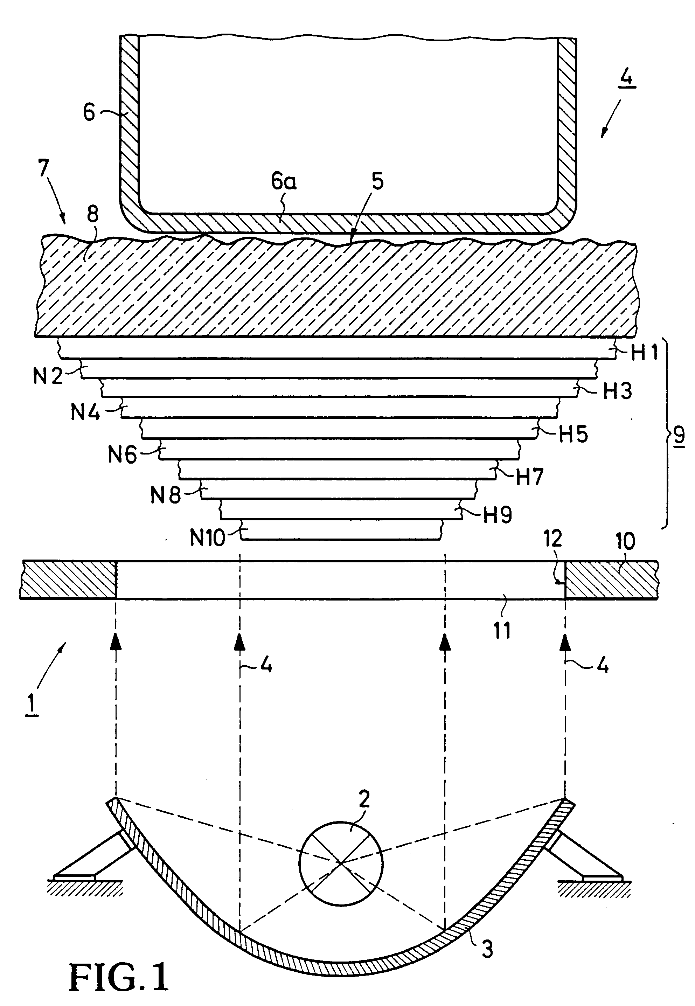

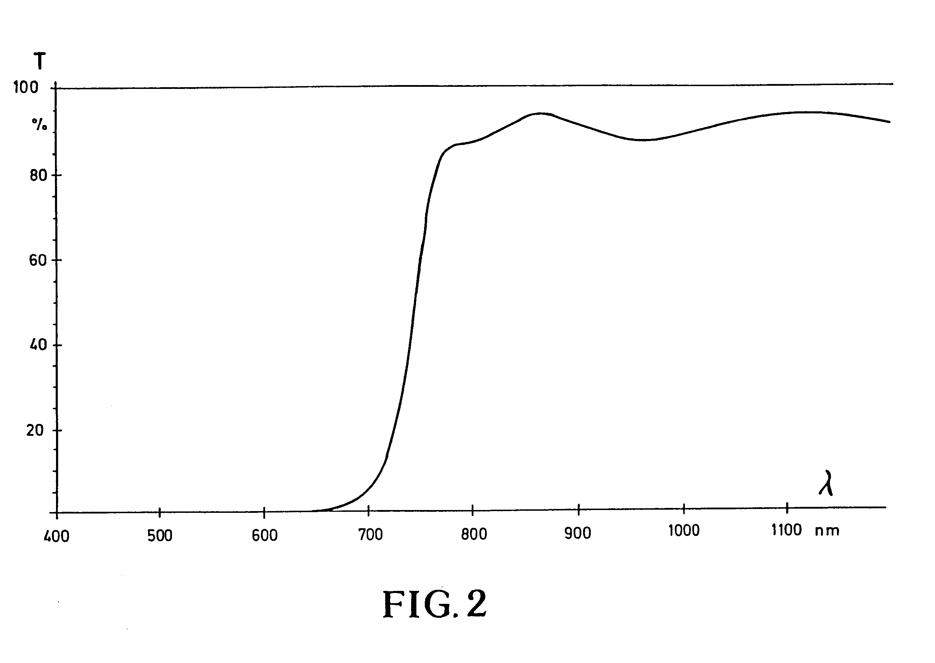

Ein Ausführungsbeispiel des Erfindungsgegenstandes und seine optischen Eigenschaften werden nachfolgend anhand der Figuren 1 und 2 näher erläutert.

Es zeigen:

Figur 1 Einen Vertikalschnitt durch eine erfindungsgemäße Heizvorrichtung mit starker Übertreibung der Dicke der einzelnen Interferenzschichten und

Figur 2 ein Diagramm, in dem das Transmissionsverhalten des Interferenz-Schichtsystems nach Figur 1 über der Wellenlänge aufgetragen ist.

In Figur 1 ist eine Heizvorrichtung 1 dargestellt, zu der eine Strahlungsquelle 2 für die Aussendung optischer Strahlung, beispielsweise eine Quarzlampe, und ein Reflektor 3 gehören, durch die zumindest der infrarote Anteil der optischen Strahlung soweit wie irgend möglich nach oben in Richtung der Pfeile 4 reflektiert wird.

Oberhalb der Strahlungsquelle 2 wird ein Garungsort 4 gebildet, der im wesentlichen durch den Querschnitt des an dieser Stelle ankommenden Bündels infraroter Strahlung definiert wird. Bei dem in Figur 1 gezeigten Ausführungsbeispiel stimmt der Garungsort 4 mit der kreisförmigen Abstellfläche 5 eines Gargutbehälters 6 überein, von dem nur der untere Teil im Bereich seines Bodens 6 a dargestellt ist.

Es ist ohne weiteres denkbar, auf den Gargutbehälter 6 zu verzichten und oberhalb der Abstellfläche 5 das Gargut selbst, z.B. ein Brathähnchen, an einem Drehspieß aufzuhängen. Der Garungsort 4 wird in diesem Fall durch die Oberfläche des Gargutes bestimmt.

Zwischen der Strahlungsquelle 2 und dem Garungsort 4 befindet sich ein Filter 7, das aus einem Trägerkörper 8 und einem Interferenz-Schichtsystem 9 besteht. Der Trägerkörper 8 besteht aus einem für die Gesamtstrahlung im wesentlichen durchlässigen Werkstoff, beispielsweise aus einem glaskeramischen Werkstoff. Bezüglich der auf dem Markt verfügbaren Werkstoffe wird auf die weiter oben genannten Warenzeichnen verwiesen.

Das Interferenz-Schichtsystem 9 besteht aus insgesamt 10 Einzelschichten H 1 - N 10, wobei die hochbrechenden Schichten durch den vorangestellten Buchstaben "H" gekennzeichnet sind und die niedrigbrechenden Schichten durch den vorangestellten Buchstaben "N". Die Schichten wechseln sich also in der Reihenfolge H 1 - N 2 - H 3 - N 4 ....... ab.

Die einzelnen Schichten haben dabei die in der nachstehenden Tabelle angegebenen optischen und physikalischen Schichtdicken. Wie sich daraus ergibt, haben die einzelnen Schichten eine Dicke, die der $\lambda/4$-Wellenlänge entspricht. Abweichungen von diesen Schichtdicken liegen im wesentlichen nur bei den Schichten H 1 und H 9 vor. Es handelt sich hierbei um sogenannte Anpassungsschichten zur Verringerung der Welligkeit der Transmissionskurve.

Der Anspruch enthält auch Schichtsysteme mit einer ähnlichen Anzahl Schichten z.B. 6 - 16 die grundsätzlich eine analoge Trenncharakteristik aufweisen wie im gezeigten Beispiel. Schichtsysteme mit weniger als 10 Schichten führen zu geringeren Kantensteilheiten sowie zu niedrigerer Blockung im betreffenden Sperrbereich.

## Tabelle

| Schicht-nummer | Schicht-material | optische Dicke | physikalische Dicke |
|---|---|---|---|
| N 10 | $SiO_2$ = | 688 nm | 119 nm |
| H 9 | Si = | 134 nm | 10 nm |
| N 8 | $SiO_2$ = | 540 nm | 93 nm |
| H 7 | Si = | 540 nm | 39 nm |
| N 6 | $SiO_2$ = | 540 nm | 93 nm |
| H 5 | Si = | 540 nm | 39 nm |
| N 4 | $SiO_2$ = | 540 nm | 93 nm |
| H 3 | Si = | 540 nm | 39 nm |
| N 2 | $SiO_2$ = | 534 nm | 92 nm |
| H 1 | Si = | 331 nm | 24 nm |

Substrat

Die einzelnen Schichten sind hinsichtlich ihrer Schichtdicke in Figur 1 stark übertrieben dargestellt, um die Figur anschaulich zu machen.

Die nach oben weisende Oberfläche 8 a des Trägerkörpers 8 ist mit einer Profilierung versehen, um eine flächige Berührung zwischen dem Gargutbehälter 6 und dem Trägerkörper 8 und dadurch dessen Aufheizung soweit wie irgend möglich zu vermeiden.

Dem Filter 7 nach Figur 1 ist weiterhin ein Maskierungselement 10 zugeordnet, das aus einer gestanzten Blechplatte mit einer oder mehreren kreisförmigen Öffnungen 11 besteht. Der Umfang der Öffnung 11 entspricht dabei im wesentlichen dem Umfang des Reflektors 3, der auch in Fluchtstellung zur Öffnung 11 angeordnet ist. Auf diese Weise entsteht ein relativ scharf begrenzter Lichtstrahl, der eine ähnlich scharf begrenzte Abstellfläche 5 auf der Oberseite des Trägerkörpers 8 definiert.

Wenn eine Heizvorrichtung mehrere Strahlungsquellen 2 mit Reflektoren 3 unterhalb ein und desselben Trägerkörpers 8 besitzt, weist auch das Maskierungselement 10 mehrere entsprechend große kreisförmige Öffnungen 11 auf. Dadurch werden innerhalb der Kochplatte mehrere, die Abstellflächen 5 definierende infrarotdurchlässige Flächenbereiche definiert, die von strahlungsundurchlässigen Flächenbereichen abgegrenzt sind. Die Grenzlinien werden durch die Ränder 12 der Öffnungen 11 gebildet.

Wie bereits weiter oben ausgeführt wurde, muß das Maskierungselement 10 nicht als getrenntes Bauteil ausgeführt sein; es ist durchaus möglich, ein Maskierungselement beispielsweise als Oberflächenbeschichtung auszubilden und auf dem Interferenz-Schichtsystem 9 anzuordnen.

Beispiel:

In einer Vakuum-Aufdampfanlage des Typs A 1100 Q (Hersteller Leybold AG, Hanau, Bundesrepublik Deutschland) wurde auf kreisförmigen Trägerkörpern (Substraten) aus dem Werkstoff "Robax" die in der Tabelle angegebene und in Figur 1 gezeigte Schichtenfolge aus insgesamt 10 Einzelschichten erzeugt. Die ebenen Substrate hatten einen Durchmesser von 170 mm und eine Dicke von 3 mm und wurden in eine kalottenförmige Substrathalterung eingelegt, die oberhalb von Verdampferquellen mit Silizium und Siliziumdioxid in einem Abstand von ca. 50 cm rotierte. Die Substrate wurden vor und während der Beschichtung auf eine Temperatur von 300° C aufgeheizt. Zur Beheizung der Verdampferquellen dienten 2 Elektronenstrahlkanonen des Typs ESV 14 (Hersteller: Leybold AG). Durch alternierende Verdampfung von Silizium einerseits und Siliziumdioxid andererseits wurde die gewünschte Schichtenfolge erzeugt.

Zu Beginn wurde die Aufdampfanlage innerhalb von 30 Minuten auf einen Druck von $5 \times 10^{-4}$ Pa evakuiert. Nach einer Aufheizzeit von einer Stunde wurden die Substrate in einer Argonatmosphäre bei einem Druck von 5 Pa 10 Minuten lang in einer Glimmentladung vorbehandelt. Anschließend wurden die Schichten aus Si und $SiO_2$ in abwechselnder Reihenfolge gemäß den vorstehenden Ausführungen und mit den in der Tabelle angegebenen Schichtdicken aufgedampft. Beim Aufbringen der Schichten aus $SiO_2$ wurde die Verdampfungsatmosphäre durch Zudosierung von Sauerstoff auf einen Sauerstoff-Partialdruck von $2 \times 10^{-2}$ P a gebracht.

Der Schichtaufbau und die Steuerung der Verdampferquellen erfolgte mittels eines optischen Schichtdickenmeßgerätes bekannter Bauart.

Nach ihrer Fertigstellung wurden die derart beschichteten Substrate in einer optischen Meßvorrichtung des Typs Lambda 9 (Hersteller: Perkin Elmer) vermessen. Die dabei aufgezeichnete Transmissionskurve ist in Figur 2 dargestellt. Daraus ist ersichtlich, daß die Filter im Spektralbereich oberhalb 780 nm eine Transmission aufweisen, deren Maximum 90 % übersteigt, wobei gleichzeitig die Transmission unterhalb einer Wellenlänge von 680 nm weniger als 2 % betrug.

Mechanische und chemische Untersuchungen der Filter im Hinblick auf die Standzeit, die Hitzebeständigkeit, die Temperaturschockbeständigkeit führten zu sehr guten Ergebnissen.

**Patentansprüche**

1. Heizvorrichtung für das Garen von Speisen mittels mindestens einer auf einen Garungsort für die Unterbringung von Gargut oder eines Gargutbehälters ausgerichteten Strahlungsquelle, die optische Strahlung mit einem sichtbaren Anteil und einem Infrarotanteil aussendet, wobei zwischen der Strahlungsquelle und dem Garungsort ein Filter mit einem Trägerkörper aus einem für die Gesamtstrahlung im wesentlichen durchlässigen Werkstoff angeordnet ist, der mit einem Interferenz-Schichtsystem versehen ist, welches den sichtbaren Anteil der Strahlung zumindest überwiegend zur Strahlungsquelle reflektiert und den Infrarotanteil der Strahlung zumindest überwiegend zum Garungsort durchläßt, dadurch gekennzeichnet, daß das Interferenz-Schichtsystem (9) aus einer alternierenden Reihenfolge von Schichten aus Silizium (H) und Siliziumdioxid (N) besteht, deren physikalische Schichtdicken für das Silizium zumindest beim überwiegenden Teil der Si-Schichten zwischen 20 und 50 nm und für das $SiO_2$ zumindest beim überwiegenden Teil der $SiO_2$-Schichten zwischen 80 und 110 nm liegen.

2. Heizvorrichtung nach Anspruch 1, dadurch gekennzeichnet, daß mindestens drei Schichtpaare in alternierender Reihenfolge Si-$SiO_2$ oder $SiO_2$-Si vorgesehen sind.

3. Heizvorrichtung nach Anspruch 2, dadurch gekennzeichnet, daß fünf Schichtpaare in alternierender Reihenfolge Si-$SiO_2$ vorgesehen sind.

4. Heizvorrichtung nach Anspruch 3, dadurch gekennzeichnet, daß die physikalischen Schichtdicken von der ersten bis zur zehnten Schicht wie folgt gewählt sind: 24 - 92 - 39 - 93 - 39 - 93 - 39 - 93 - 10 - 119 nm

**5.** Heizvorrichtung nach Anspruch 2, dadurch gekennzeichnet, daß die Schichtenfolge, ausgehend von dem Trägerkörper (8), mit einer Schicht aus Si beginnt.

**6.** Heizvorrichtung nach Anspruch 2, dadurch gekennzeichnet, daß die Schichtenfolge mit einer Schicht aus $SiO_2$ endet.

**7.** Heizvorrichtung nach Anspruch 1, dadurch gekennzeichnet, daß der Trägerkörper (8) aus einem infrarotdurchlässigen glaskeramischen Werkstoff besteht und mit dem Interferenz-Schichtsystem als Kochplatte ausgebildet ist.

**8.** Heizvorrichtung nach Anspruch 7, dadurch gekennzeichnet, daß das Interferenz-Schichtsystem (9) auf der Unterseite des Trägerkörpers (8) angeordnet ist.

**9.** Heizvorrichtung nach Anspruch 7, dadurch gekennzeichnet, daß die Kochplatte mehrere Abstellflächen (5) für Gargutbehälter (6) aufweist und mit einem zumindest weitgehend gegenüber optischer Strahlung undurchlässigen Maskierungselement (10) versehen ist, durch das innerhalb der Kochplatte mehrere, die Abstellflächen definierende infrarotdurchlässige Flächenbereiche von strahlungsundurchlässigen Flächenbereichen abgegrenzt sind.

**10.** Heizvorrichtung nach Anspruch 9, dadurch gekennzeichnet, daß die infrarotdurchlässigen Flächenbereiche als kreisformige Öffnungen (11) innerhalb des Maskierungselements (10) angeordnet sind.

**11.** Heizvorrichtung nach Anspruch 1, dadurch gekennzeichnet, daß das Interferenz-Schichtsystem (9) hinsichtlich seiner spektralen Eigenschaften einen solchen Kantenverlauf hat, daß es für einen Strahlungsanteil im sichtbaren Rotbereich durchlässig ist.

**12.** Heizvorrichtung nach Anspruch 1, dadurch gekennzeichnet, daß die Auslegung des Interferenz-Schichtsystems (9) so gewählt ist, daß der Durchlässigkeitsbereich für den Infrarotanteil bei einer Strahlungs-Wellenlänge von 750 nm beginnt.

## Claims

**1.** Heating device for cooking food by means of at least one radiation source, which is directed at a cooking location for accommodating items to be cooked or a container for the latter and which emits optical radiation with a visible component and an infrared component, a filter with a bearing body of a material which is essentially transparent to the total radiation being arranged between the radiation source and the cooking location, which body is provided with an interference layer system which reflects at least most of the visible component of the radiation towards the radiation source and transmits at least most of the infrared component of the radiation towards the cooking location, characterised in that the interference layer system (9) consists of an alternating sequence of layers of silicon (H) and silicon dioxide (N), the physical layer thicknesses of which are between 20 and 50 nm for at least most of the Si layers and between 80 and 110 nm for at least most of the $SiO_2$ layers.

**2.** Heating device according to claim 1, characterised in that at least three layer pairs are provided in an alternating Si-SiO$_2$ or SiO$_2$-Si sequence.

**3.** Heating device according to claim 2, characterised in that five layer pairs are provided in an alternating Si-SiO$_2$ sequence.

**4.** Heating device according to claim 3, characterised in that the physical layer thicknesses from the first to the tenth layer are as follows: 24 - 92 - 39 - 93 - 39 - 93 - 39 - 93 - 10 - 119 nm.

**5.** Heating device according to claim 2, characterised in that, starting from the bearing body (8), the layer sequence commences with a layer of Si.

**6.** Heating device according to claim 2, characterised in that the layer sequence ends with a layer of $SiO_2$.

7. Heating device according to claim 1, characterised in that the bearing body (8) consists of an infrared-transparent glass-ceramic material and, with the interference layer system, is formed as a hot plate.

8. Heating device according to claim 7, characterised in that the interference layer system (9) is arranged on the underside of the bearing body (8).

9. Heating device according to claim 7, characterised in that the hot plate comprises a plurality of placement surfaces (5) for containers (6) for items to be cooked and is provided with a masking element (10), which is at least largely opaque to optical radiation and via which a plurality of infrared-transparent plane areas, which define the placement surfaces, are separated inside the hot plate from plane areas which are opaque to radiation.

10. Heating device according to claim 9, characterised in that the infrared-transparent plane areas are arranged as circular openings (11) inside the masking element (10).

11. Heating device according to claim 1, characterised in that, with regard to its spectral properties, the interference layer system (9) has an edge characteristic which is such that it is transparent to a radiation component in the visible red region.

12. Heating device according to claim 1, characterised in that the interference layer system (9) is designed such that the transmission region for the infrared component begins at a radiation wavelength of 750 nm.


**Revendications**

1. Dispositif de chauffage pour la cuisson à point d'aliments au moyen d'au moins une source de rayonnement dirigée sur un point de cuisson destiné à recevoir des aliments à cuire ou un récipient d'aliments à cuire, qui émet un rayonnement optique comportant une fraction visible et une fraction infrarouge, entre la source de rayonnement et le point de cuisson étant prévu un filtre muni d'un support en un matériau sensiblement perméable à l'ensemble du rayonnement, qui est muni d'un système de couches d'interférences qui réfléchit au moins en majeure partie vers la source de rayonnement la fraction visible du rayonnement et qui laisse passer au moins en majeure partie vers le point de cuisson la fraction infrarouge du rayonnement, caractérisé en ce que le système de couches d'interférences (9) consiste en une succession alternée de couches de silicium (H) et de dioxyde de silicium (N) dont les épaisseurs physiques sont situées pour le silicium au moins pour la majeure partie des couches de Si entre 20 et 50 nm et pour $SiO_2$ au moins pour la majeure partie des couches de $SiO_2$ entre 80 et 110 nm.

2. Dispositif de chauffage selon la revendication 1, caractérisé en ce qu'il est prévu au moins trois paires de couches en succession alternée Si-$SiO_2$ ou $SiO_2$-Si.

3. Dispositif de chauffage selon la revendication 2, caractérisé en ce qu'il est prévu cinq paires de couches en succession alternée Si-$SiO_2$.

4. Dispositif de chauffage selon la revendication 3, caractérisé en ce que les épaisseurs physiques des couches sont choisies de la manière suivante de la première à la dixième couche : 24 - 92 - 39 - 93 - 39 - 93 - 39 - 93 - 10 - 119 nm.

5. Dispositif de chauffage selon la revendication 2, caractérisé en ce que la succession des couches commence par une couche de Si en partant du support (8).

6. Dispositif de chauffage selon la revendication 2, caractérisé en ce que la succession des couches se termine par une couche de $SiO_2$.

7. Dispositif de chauffage selon la revendication 1, caractérisé en ce que le support (8) consiste en un matériau vitrocéramique perméable aux infrarouges agencé avec le système de couches d'interférences sous forme d'une plaque de cuisson.

8. Dispositif de chauffage selon la revendication 7, caractérisé en ce que le système de couches d'interférences (9) est agencé sur le côté inférieur du support (8).

9. Dispositif de chauffage selon la revendication 7, caractérisé en ce que la plaque de cuisson comporte plusieurs surfaces d'appui (5) pour des récipients d'aliments à cuire (6) et est munie d'un élément de masquage (10), au moins sensiblement totalement imperméable au rayonnement optique, par lequel, dans la plaque de cuisson, plusieurs domaines de surface perméables aux infrarouges et définissant les surfaces d'appui sont limités par des domaines de surface imperméables au rayonnement.

10. Dispositif de chauffage selon la revendication 9, caractérisé en ce que les domaines de surface perméables aux infrarouges sont agencés sous forme d'ouvertures circulaires (11) à l'intérieur de l'élément de masquage (10).

11. Dispositif de chauffage selon la revendication 1, caractérisé en ce que, du point de vue de ses propriétés spectrales, le système de couches d'interférences (9) présente des arêtes de configuration telles qu'il est perméable à une fraction de rayonnement située dans le domaine rouge visible.

12. Dispositif de chauffage selon la revendication 1, caractérisé en ce que l'agencement du système de couches d'interférences (9) est choisi de telle manière que le domaine de perméabilité à la fraction infrarouge commence à une longueur d'onde de rayonnement de 750 nm.

EP 0 464 056 B1

FIG.1

FIG. 2